# EUROPEAN PATENT APPLICATION

(11) **EP 3 502 986 A1**
(43) Date of publication of application: **26.06.2019**
(21) Application number: 18203823.2
(22) Date of filing: 31.10.2018
(51) Int. Cl.: G06Q 10/08

(54) **PARTS TRACE MANAGEMENT SYSTEM AND PARTS TRACE MANAGEMENT METHOD**

(30) Priority: 20.12.2017 JP 2017243903
(71) Applicant: TOYOTA JIDOSHA KABUSHIKI KAISHA, Toyota-shi, Aichi 471 8571 (JP)
(72) Inventor: SHIDEI, Hajime, Toyota-shi,, Aichi 471-8571 (JP); IMAYOSHI, Shoichi, Toyota-shi,, Aichi 471-8571 (JP); MISAKI, Kenji, Toyota-shi,, Aichi 471-8571 (JP)
(74) Representative: J A Kemp

(57) **Abstract**

A parts trace management system includes: a manufacturing line to which parts with a signboard attached thereto are supplied; a reader configured to read a signboard that is removed when the parts start to be supplied to the manufacturing line; and a storage unit configured to store a read time of a group of signboards including the signboard collected at a predetermined time, the read time being read by the reader. A group of products using the parts with the signboard attached thereto is narrowed down by defining a time period from a read time of a group of signboards collected two times before the collection of the signboard to a read time of a group of signboards collected immediately after the collection of the signboard as a time period during which the parts with the signboard attached thereto are used in the manufacturing line.

## Description

### BACKGROUND

The present disclosure relates to a parts trace management system and a parts trace management method, especially, to a parts trace management system and a parts trace management method using signboards associated with parts.

For example, Japanese Unexamined Patent Application Publication No. H3-131438 discloses a parts delivery instruction apparatus capable of collecting signboards (order instruction cards) associated with parts, reading the signboards by a reader and recognizing use records of parts. Note that when parts are supplied to a manufacturing line, that is, when parts start to be used, their signboards are removed and put together in a signboard collecting box. The signboards put in the box are collected at a predetermined time and collectively read by a reader.

### SUMMARY

The inventors have found the following problem related to a parts trace management system and a parts trace management method using signboards associated with parts.

For example, when it is found that defective parts are used in products after the products are shipped, it is necessary to thoroughly extract (i.e., find) all the products using the defective parts and replace those defective parts with new ones.

Therefore, for example, in the case of automobile products, for some types of parts such as engines, serial numbers are attached to individual parts by using barcodes, two-dimensional codes, etc. Further, it is possible to associate parts with products on a one-to-one basis by reading the barcodes or the like when the parts are assembled onto the products. Meanwhile, it is difficult to assign serial numbers to all the parts and thereby associate the parts with the products on a one-to-one basis from the viewpoint of productivity, costs, etc.

Therefore, by the technique disclosed in Japanese Unexamined Patent Application Publication No. H3-131438, it is possible to narrow down products with defective parts mounted thereon to some degree based on the time when signboards corresponding to the defective parts are read by a reader. However, since the signboards are collected at a predetermined time and collectively read, it is not easy to narrow them down to products with the parts mounted thereon corresponding to each of the signboards.

In the past, since the aim of the above-described techniques has been to thoroughly extract (i.e., find) all the products with defective parts mounted thereon, it has been impossible to sufficiently narrow down the products to be extracted. That is, there has been a problem that a number of products are extracted as being products requiring parts replacement, despite defective parts not actually being mounted in the products.

The present disclosure has been made in view of the above-described circumstances, and provides a parts trace management system and a parts trace management method capable of reducing the number of products to be extracted while thoroughly extracting all the products using defective parts.

A first exemplary aspect is a parts trace management system, including: a manufacturing line to which parts with a signboard attached thereto are supplied;
a reader configured to read a signboard that is removed when the parts start to be supplied to the manufacturing line; and
a storage unit configured to store a read time of a group of signboards including the signboard collected at a predetermined time, the read time being read by the reader,
the parts trace management system being configured to narrow down a group of products using the parts with the signboard attached thereto based on the read time of the group of the signboards read by the reader,
in which the group of the products using the parts with the signboard attached thereto is narrowed down by defining a time period from a read time of a group of signboards collected two times before the collection of the signboard to a read time of a group of signboards collected immediately after the collection of the signboard as a time period during which the parts with the signboard attached thereto are used in the manufacturing line.

In the parts trace management system according to the above exemplary aspect of the present disclosure, the group of the products using the parts with the signboard attached thereto are narrowed down by defining a time period from a read time of a group of signboards collected two times before the collection of the signboard to a read time of a group of signboards collected immediately after the collection of the signboard as a time period during which the parts with the signboard attached thereto is used in the manufacturing line. The parts with the signboard attached thereto are never used before a read time of a group of signboards collected two times before the collection of the signboard. Further, the parts with the signboard attached thereto are also never used later than a read time of a group of signboards collected immediately after the collection of the signboard (i.e., collected in the next collection after the collection of the signboard). For the above reason, the number of products to be extracted can be reduced while all the products using defective parts are thoroughly extracted.

The narrowed-down products may be extracted based on identification information of the signboard by storing the correspondence between the narrowed-down group of the products and the signboard in the storage unit. With such a structure, it is possible to quickly extract products corresponding to their signboards.

The parts trace management system may further include a reader-equipped manufacturing line provided with another reader configured to read a signboard, in which
in the reader-equipped manufacturing line, a signboard attached to parts is read by the another reader when the parts start to be supplied to the reader-equipped manufacturing line, and
for the parts with the signboard attached thereto which has been read by the another reader, the group of the products using the parts may be narrowed down by defining a time period from a read time of the signboard read by the another reader to a read time of a next signboard as a time period during which the parts are used in the reader-equipped manufacturing line.

Regarding products manufactured in the reader-equipped manufacturing line, when products using defective parts are extracted based on the signboards, the number of products to be extracted can be further reduced than that of products manufactured in the manufacturing line (i.e., the manufacturing line equipped with no reader).

Another exemplary aspect is a parts trace management method including:
removing a signboard attached to parts when the parts start be supplied to a manufacture line;
collecting a group of signboards including the removed signboard at a predetermined time and collectively reading the collected group of signboards by a reader, and
narrowing down a group of products using the parts with the signboard attached thereto based on a read time of the group of the signboards by the reader, in which
the group of the products using the parts with the signboard attached thereto are narrowed down by defining a time period from a read time of a group of signboards collected two times before the collection of the signboard to a read time of a group of signboards collected immediately after the collection of the signboard as a time period during which the parts with the signboard attached thereto are used in the manufacturing line.

In the parts trace management method according to the above exemplary aspect of the present disclosure, the group of the products using the parts with the signboard attached thereto are narrowed down by defining a time period from a read time of a group of signboards collected two times before the collection of the signboard to a read time of a group of signboards collected immediately after the collection of the signboard as a time period during which the parts with the signboard attached thereto are used in the manufacturing line. The parts with the signboard attached thereto are never used before a read time of a group of signboards collected two times before the collection of the signboard. Further, the parts with the signboard attached thereto are also never used after a read time of a group of signboards collected immediately after the collection of the signboard. For the above reason, the number of products to be extracted can be reduced while all the products using defective parts are thoroughly extracted.

The narrowed-down products may be extracted based on identification information of the signboard by storing the correspondence between the narrowed-down group of the products and the signboard. With such a structure, it is possible to quickly extract products corresponding to their signboards.

In a reader-equipped manufacturing line provided with another reader configured to read a signboard, a signboard attached to parts is read by the another reader when the parts start to be supplied to the reader-equipped manufacturing line, and
for the parts with the signboard attached thereto which has been read by the another reader, the group of the products using the parts may be narrowed down by defining a time period from a read time of the signboard read by the another reader to a read time of a next signboard as a time period during which the parts are used in the reader-equipped manufacturing line.

Regarding products manufactured in a reader-equipped manufacturing line, when products using defective parts are extracted based on the signboards, the number of products to be extracted can be further reduced than that of products manufactured in the manufacturing line.

According to the present disclosure, it is possible to provide a parts trace management system and a parts trace management method capable of reducing the number of products to be extracted while thoroughly extracting all the products using defective parts.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 shows a block diagram of a parts trace management system according to a first embodiment;
Fig. 2 shows signboard read information DB1 and information output from a use time determination unit 11;
Fig. 3 shows manufacturing record information DB2 and information output from a time corresponding product extracting unit 12;
Fig. 4 shows parts information DB3 and information output from a parts corresponding product extracting unit 13;
Fig. 5 shows information output from a defective product extracting unit 14;
Fig. 6 shows a timing chart for explaining a method for determining a use time of each signboard in a manufacture line;
Fig. 7 shows a block diagram of a parts trace management system according to a second embodiment; and
Fig. 8 shows signboard read information DB1 and information output from a use time determination unit 11.

### DESCRIPTION OF EMBODIMENTS

Specific embodiments to which the present disclosure is applied are explained hereinafter in detail with reference to the drawings. However, the present disclosure is not limited to the following embodiments. Further, for clarifying the explanation, the following descriptions and the drawings are simplified as appropriate.

### (First Embodiment)

### <Configuration of parts trace management system>

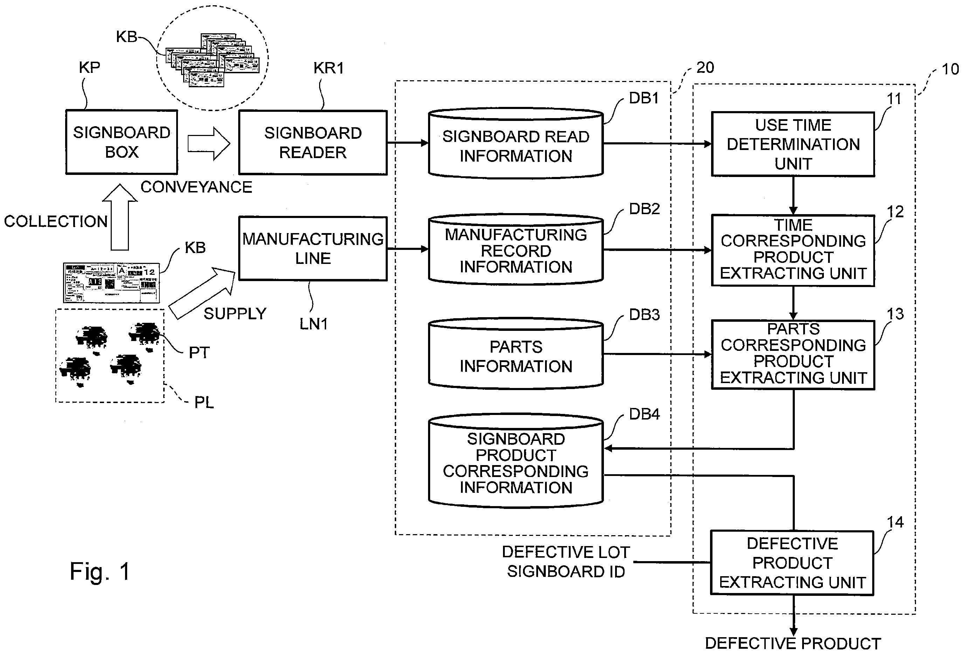

First, a parts trace management system according to a first embodiment is described with reference to Fig. 1. Fig. 1 shows a block diagram of the parts trace management system according to the first embodiment. The parts trace management system shown in Fig. 1 is, for example, a system for narrowing down automobile products with defective parts mounted thereon by using signboards (order instruction cards) associated with parts.

As shown in Fig. 1, this parts trace management system includes a manufacturing line LN1, a signboard reader KR1, a control unit 10, and a storage unit 20.

A flow of a signboard KB attached to parts PT is described hereinafter.

As shown in Fig. 1, the signboard KB is attached to each lot of parts (hereinafter referred to as a parts lot) PL which is composed of a plurality of parts PT having the same parts number. When the first part PT is taken out from the parts lot PL with the signboard KB attached thereto and is supplied to the manufacturing line LN1, the signboard KB is removed. The removed signboard KB is collected in a signboard box KP.

The plurality of signboards KB (i.e., a group of the signboards) collected in the signboard box KP are carried to the signboard reader KR1 at a predetermined time and read collectively. The signboard IDs that are different from one another are attached to each of the signboard KB by using barcodes, two-dimensional codes, etc. Further, the barcodes and the like attached to each of the signboard KB are read by the signboard reader KR1.

Next, the control unit 10 and the storage unit 20 are described in detail.

As shown in Fig. 1, the control unit 10 narrows down products using parts PT with a signboard KB attached thereto based on a read time of each signboard KB read by signboard reader KR1. Specifically, the control unit 10 includes four function blocks, i.e., a use time determination unit 11, a time corresponding product extracting unit 12, a parts corresponding product extracting unit 13, and a defective product extracting unit 14.

Each function block constituting the control unit 10 can be composed of a CPU, a memory and other circuits (not shown) as hardware, and can be achieved by executing a program loaded in the memory or the like as software. Accordingly, those skilled in the art can understand that these function blocks can be implemented in various ways by using only hardware, only software, or a combination thereof, and are not limited to those implemented by any one of them.

Further, as shown in Fig. 1, the storage unit 20 stores four databases, i.e., signboard read information DB1, manufacturing record information DB2, parts information DB3, and signboard product corresponding information DB4. The storage unit 20 is composed of a single or a plurality of storage apparatuses such as a hard disk and a memory. For example, when a plurality of hard disks, memories and the like constitute the storage unit 20, they may be placed so as to be separated from each other and connected to each other through a network.

As shown in Fig. 1, the use time determination unit 11 determines a time period during which the parts PT with the respective signboards KB attached thereto could have been used in the manufacturing line LN1 based on the signboard read information DB1.

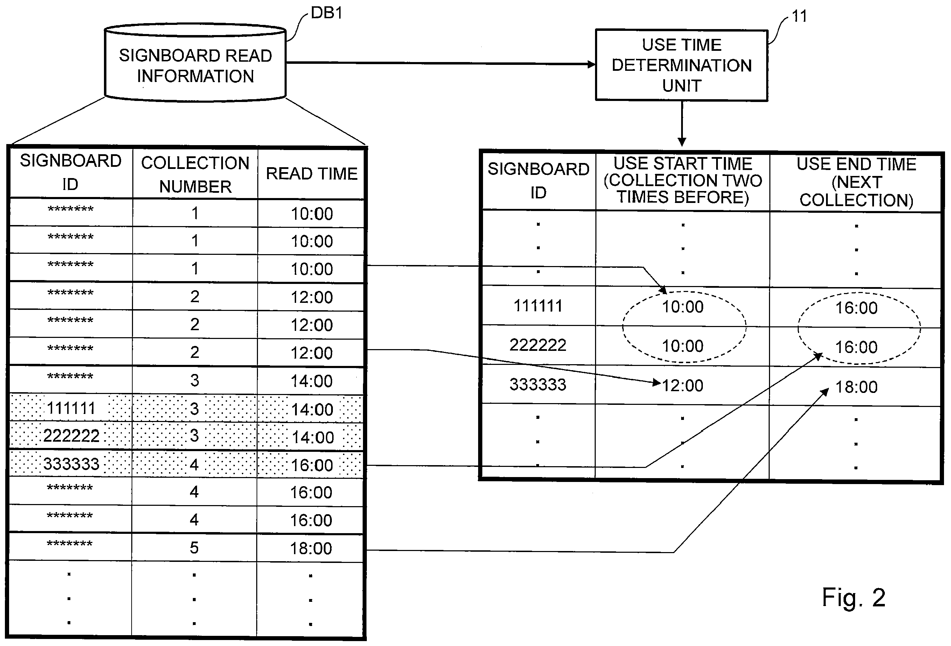

Note that Fig. 2 shows signboard read information DB1 and information output from the use time determination unit 11. Further, both the signboard read information DB1 and the information output from the use time determination unit 11 shown in Fig. 2 are imaginary.

As shown in Fig. 2, the signboard read information DB1 includes the number of times of collection and a read time of each signboard KB read by the signboard reader KR1. Each signboard KB is identified by a unique signboard ID which is identification information. In the example shown in Fig. 2, a plurality of signboards KB collected from the signboard box KP in the first collection were all read at time 10:00. A plurality of signboards KB collected from the signboard box KP in the second collection were all read at time 12:00. Similarly, in the example shown in Fig. 2, a plurality of signboards KB put in the signboard box KP were collected and read every two hours.

The signboard read information DB1 shown in Fig. 2, as an imaginary specific example, includes a signboard KB with a signboard ID 111111, a signboard KB with a signboard ID 222222, and a signboard KB with a signboard ID 333333. As shown in Fig. 2, both the signboard KB with the signboard ID 111111 and the signboard KB with the signboard ID 222222 were collected in the third collection and read at time 14:00. On the other hand, the signboard KB with the signboard ID 333333 was collected in the fourth collection and read at time 16:00.

Further, as shown in Fig. 2, for each signboard KB, the use time determination unit 11 determines a read time of a signboard KB collected two times before the collection of that signboard KB as a use start time in the manufacturing line LN1, and determines a read time of a signboard KB collected next time as a use end time. That is, the information output from the use time determination unit 11 includes a use time period (a use start time and a use end time) of each signboard in the manufacturing line LN1.

As described above, for each signboard KB, a time period from the read time of the signboard KB collected in the collection two times before the collection of that signboard KB to the read time of the signboard KB collected next time is defined as a use time period in the manufacturing line LN1. As a result, it is possible to provide an advantageous effect that the number of products to be extracted can be reduced while all the products using defective parts are thoroughly extracted. Details of a method for determining a use time period of each of the signboards described above in a manufacturing line and the above-described advantageous effect will be described later.

An explanation is given using the above-described imaginary specific example.

As shown in Fig. 2, for both the signboard KB with the signboard ID 111111 and the signboard KB with the signboard ID 222222 collected in the third collection, the read time 10:00 of the signboards KB collected in the first collection, that is, collected two times before the collection of the signboards KB is defined as a use start time in the manufacturing line LN1. Further, for both of them, the read time 16:00 of the signboards KB collected in the fourth collection, that is, collected next time is defined as a use end time in the manufacturing line LN1.

On the other hand, for the signboard KB with the signboard ID 333333 collected in the fourth collection, the read time 12:00 of the signboard KB collected in the second collection, that is, collected two times before the collection of the signboard KB is defined as a use start time in the manufacturing line LN1. Further, the read time 18:00 of the signboard KB collected in the fifth collection, that is, collected next time is defined as a use end time in the manufacturing line LN1.

Referring to Fig. 1 again, the explanation will be continued. For each signboard KB, the time corresponding extracting unit 12 extracts products which had been on the manufacturing line LN1 during the above-described use time period based on the information output from the use time determination unit 11 (a use time period of each signboard KB) and the manufacturing record information DB2.

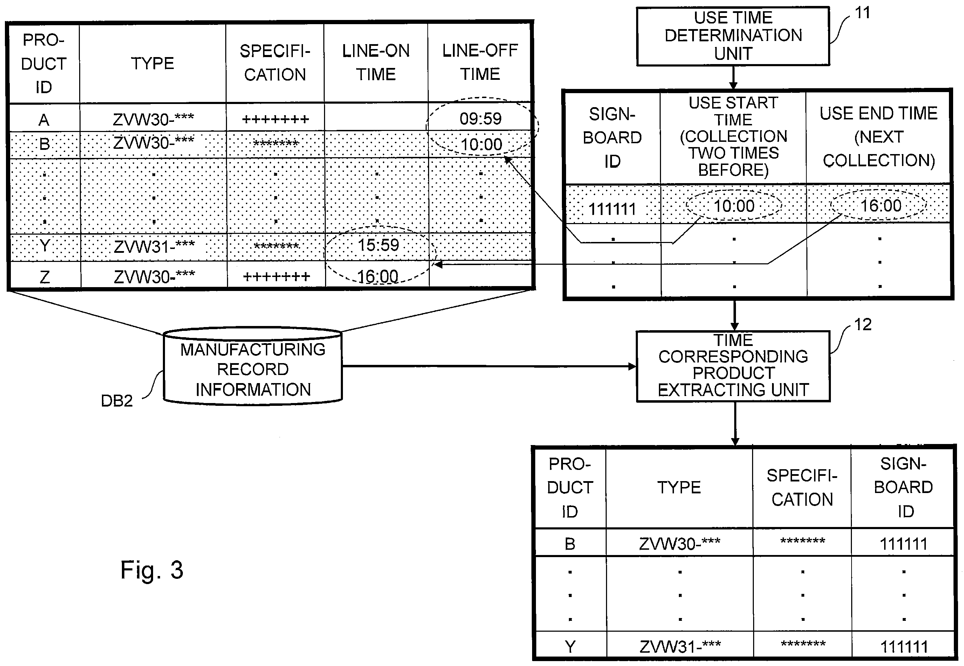

Note that Fig. 3 shows manufacturing record information DB2 and information output from the time corresponding product extracting unit 12. Further, information output from the use time determination unit 11 is also shown in Fig. 3. Furthermore, both the manufacturing record information DB2 and the information output from the time corresponding product extracting unit 12 shown in Fig. 3 are imaginary.

As shown in Fig. 3, the manufacturing record information DB2 includes: a type and specifications of a product manufactured in the manufacturing line LN1; time (line-on time) when the product was put on the manufacturing line LN1 and assembly of the parts PT onto the product started; and time (line-off time) when the product was removed from the manufacturing line LN1. Specifically, in the case of automobile products, the line-on time is time when a vehicle is lifted up in (e.g., suspended from) the manufacturing line LN1 and assembly of parts PT onto the vehicle is started. Note that the vehicle may be placed on the manufacturing line LN1 instead of being suspended from the manufacturing line LN1.

Each product is identified by a unique product ID and arranged in order of manufacturing.

Note that as shown in Fig. 1, the manufacturing record information DB2 can be obtained from the manufacturing line LN1.

On the other hand, the information output from the use time determination unit 11 includes a use time period (a use start time and a use end time) of each signboard KB in the manufacturing line LN1. In the imaginary specific example shown in Fig .3, a use time period of the signboard KB with the signboard ID 111111 in the manufacturing line LN1 is the time from 10:00 to 16:00.

As shown in Fig. 3, for each signboard KB, the time corresponding product extracting unit 12 extracts the products which had been on the manufacturing lien LN1 during the above-described use time period. The information output from the time corresponding product extracting unit 12 includes information on products (i.e., product IDs) corresponding to each signboard KB and its type and specifications.

As shown in Fig. 3, regarding the above-described signboard KB with the signboard ID 111111, all the products starting from a product B that is removed from the line at or after the use start time 10:00 of the signboard KB in the manufacturing line LN1 to a product Y that is put on the line at or before the use end time 16:00 are extracted. Similarly, regarding the signboard KB with the signboard ID 222222, the signboard KB with the signboard ID 333333 and other signboards KB shown in Fig. 2, products which had been on the manufacturing line LN1 during the use time period are extracted.

Specifically, as shown in Fig. 2, for the signboard KB with the signboard ID 222222, the same product group from the product B to the product Y is extracted since the use time period of the signboard KB with the signboard ID 222222 is the same as that of the signboard KB with the signboard ID 111111. On the other hand, for the signboard KB with the signboard ID 333333, a different product group is extracted since the use time period of the signboard KB with the signboard ID 333333 is different from that of the signboard KB with the signboard ID 111111.

Referring to Fig. 1 again, the explanation will be continued. The parts corresponding product extracting unit 13 extracts products with parts PT corresponding to each signboard KB mounted thereon from the information output from the time corresponding product extracting unit 12 based on the parts information DB3. As a result, for each signboard KB, products on which the parts PT corresponding to that signboard KB have possibly been mounted are extracted. The information output from the parts corresponding extracting unit 13 is stored in the storage unit 20 as signboard product corresponding information DB4 in which each signboard KB and the products are associated with each other.

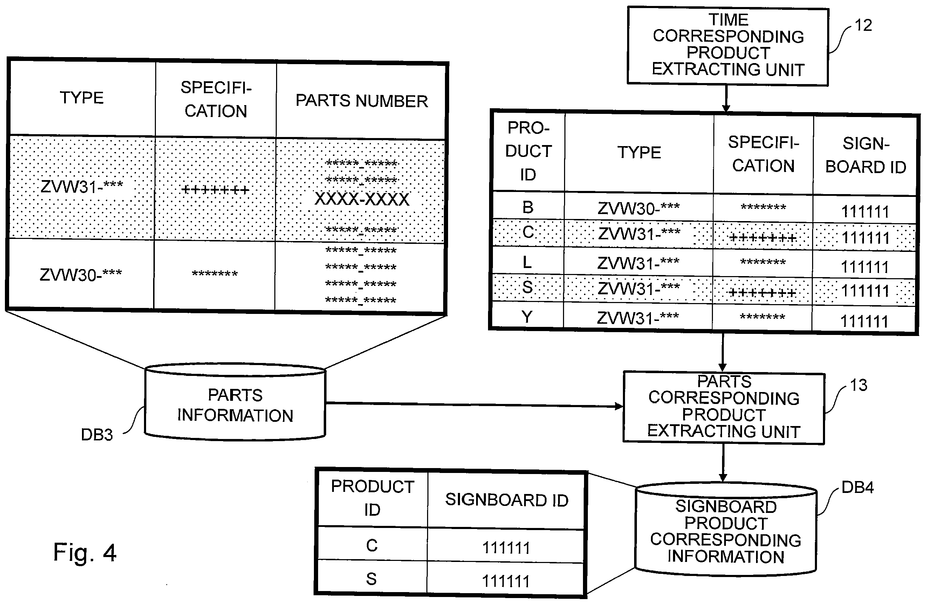

Note that Fig. 4 shows parts information DB3 and information output from the parts corresponding product extracting unit 13. Further, information output from the time corresponding product extracting unit 12 is also shown in Fig. 4. Furthermore, both the parts information DB3 and the information output from the parts corresponding extracting unit 13 shown in Fig. 4 are imaginary.

As shown in Fig. 4, the parts information DB3 includes types, specifications, and information on parts used for products having such types and specifications. Each kind of parts is identified by a parts number.

On the other hand, the information output from the time corresponding product extracting unit 12 includes information on products (i.e., product IDs) corresponding to each signboard KB and its type and specifications. The imaginary specific example shown in Fig. 4 includes types and specifications of products B, C, L, S, and Y corresponding to the signboard KB with the signboard ID 111111.

As shown in Fig. 4, the parts corresponding product extracting unit 13 extracts products with parts PT corresponding to each signboard KB mounted thereon from the information output from the time corresponding product extracting unit 12 based on the parts information DB3. The information output from the parts corresponding product extracting unit 13 includes information on products (i.e., product IDs) corresponding to each signboard KB.

As shown in Fig. 4, the parts number of the part PT corresponding to the above-described signboard KB with the signboard ID of 111111 is XXXX-XXXX. Therefore, among the products B, C, L, S and Y extracted by the time corresponding products extracting unit 12, only the products C and S corresponding to types and specifications mounted with the part PT are extracted. Similarly, regarding the signboard KB with the signboard ID 222222, the signboard KB with the signboard ID 333333 and other signboards KB shown in Fig. 2, only products mounted with the part PT corresponding to each signboard KB are extracted.

Referring to Fig. 1 again, the explanation will be continued. The defective product extracting unit 14 extracts products corresponding to the signboard ID, i.e., defective products, from the signboard corresponding information DB4 based on the signboard ID corresponding to a parts lot (a defective lot) in which the defect has occurred. The defective product extracting unit 14 functions when a defect occurs in the parts PT and the signboard ID of the defective lot is input thereto. That is, the defective product extracting unit 14 does not function as long as a defect does not occur in the parts PT.

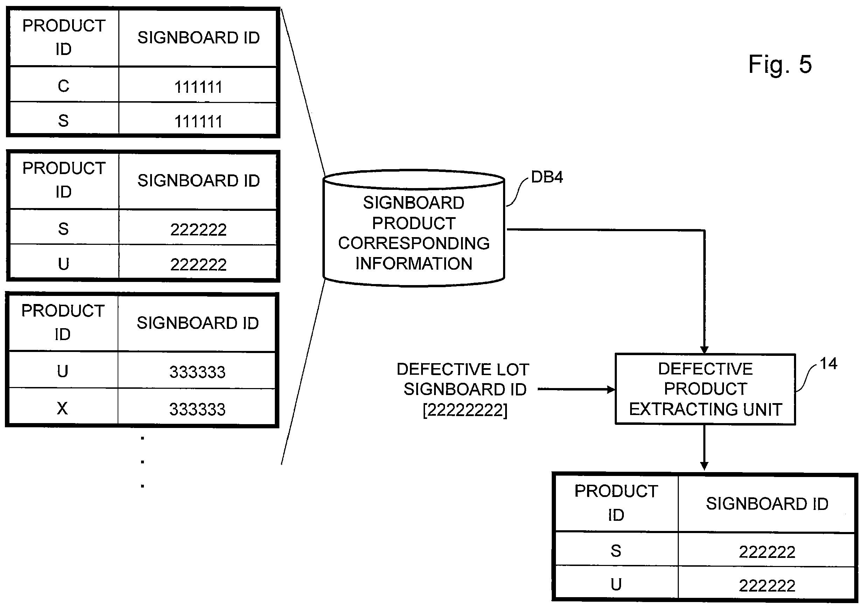

Note that Fig. 5 shows information output from the defective product extracting unit 14. Further, the signboard product corresponding information DB4 is also shown in Fig. 5. Furthermore, both the information output from the defective product extracting unit 14 and the signboard product corresponding information DB4 shown in Fig. 5 are imaginary.

As shown in Fig. 5, the signboard product corresponding information DB4 includes information on products (i.e., product IDs) on which the parts PT corresponding to each signboard KB have possibly been mounted.

As an imaginary specific example, the products on which the parts PT corresponding to the signboard KB with the signboard ID of 111111 have possibly been mounted are the products C and S. The products on which the parts PT corresponding to the signboard KB with the signboard ID 222222 have possibly been mounted are the products S and U. The products on which the parts PT corresponding to the signboard KB with the signboard ID 333333 have possibly been mounted are the products U and X.

Further, in the example shown in Fig. 5, the signboard ID 222222 of the defective lot is input to the defective product extracting unit 14 and the products S and U are extracted as defective products.

Note that when the signboard ID 111111 of the defective lot is input, the products C and S are extracted as defective products. Further, when the signboard ID 333333 of the defective lot is input, the products U and X are extracted as defective products.

In the parts trace management system according to this embodiment, as described above, the signboard product corresponding information DB4 in which each signboard KB and the products on which the parts PT corresponding to each signboard KB have possibly been mounted are associated with each other is previously stored in the storage unit 20. Therefore, from a signboard ID corresponding to a defective lot, defective products corresponding to this signboard ID can be quickly extracted.

### <Method for Determining use time in manufacturing line>

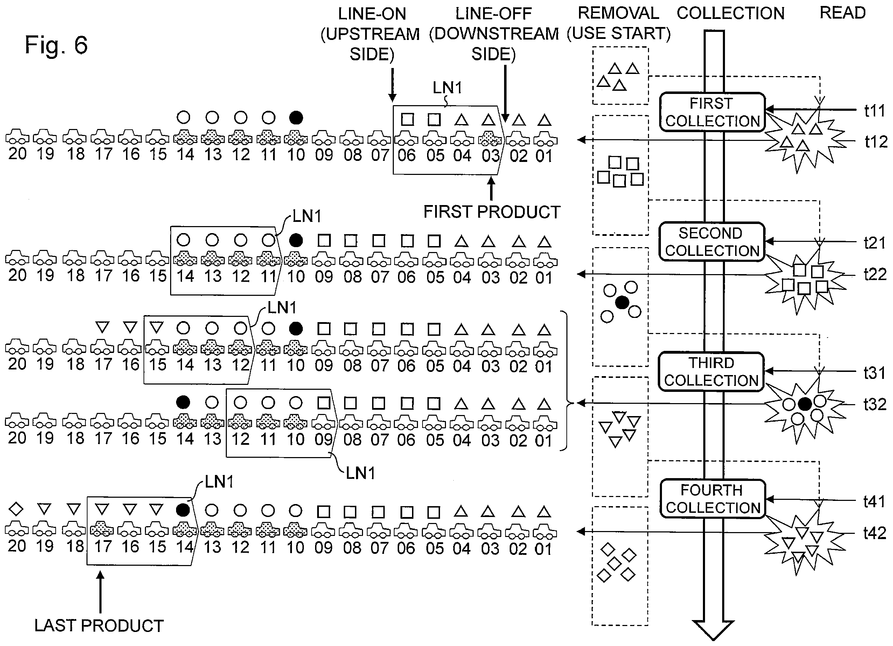

Next, a method for determining a use time of each signboard in a manufacturing line with reference to Fig. 6 will be explained. Fig. 6 shows a timing chart for explaining the method for determining a use time of each signboard in a manufacture line. One of the features of the parts trace management system according to this embodiment lies in the method for determining a use time of each signboard in a manufacturing line in the use time determination unit 11 shown in Fig. 2. As described above, for each signboard KB, the time period form the read time of the signboards KB collected two times before the collection of that signboard KB to the read time of the signboard KB collected next time is defined as the use time period in the manufacturing line LN1. The reason for this is explained below.

In Fig. 6, a time progresses from the top to the bottom as indicated by an outlined arrow and signboards KB are collected four times.

At a time t11, the signboards KB collected in the first collection are indicated by triangles. The signboards KB indicated by the triangles are read at a time t12.

At a time t21, the signboards KB collected in the second collection are indicated by squares. The signboards KB indicated by the squares are read at a time t22.

At a time t31, the signboards KB collected in the third collection are indicated by circles. The signboards KB indicated by the circles are read at a time t32.

At a time t41, the signboards KB collected in the fourth collection are indicated by inverted triangles. The signboards KB indicated by the inverted triangles are read at a time t42.

Then, the signboards KB indicated by diamond shapes are collected after the signboards KB indicated by the inverted triangles are collected.

Note that each part PT corresponding to the above-described signboards KB indicated by the triangles, squares, circles, inverted triangles, and diamond shapes has the same parts number. A lot that has started to be used earlier is used first. Therefore, the parts PT corresponding to the signboards KB indicated by the triangles, squares, circles, inverted triangles, and diamond shapes are used in order.

In Fig. 6, at the read time t12, t22, t32 and t42 of the signboards KB, products (automobiles) on the manufacturing line LN1 are shown schematically. Note that the products to which numbers from 01 to 20 are assigned are manufactured in the order of the assigned numbers.

In Fig. 6, a signboard KB indicated by a black circle among the signboards KB collected in the third collection indicated by the circles is discussed.

First, regarding the situation of the manufacturing line LN1 at the read time t32 of the signboards KB collected in the third collection indicated by the circles, two extreme cases are conceivable as shown in Fig.6. First, as indicated in the upper one of two manufacturing lines LN1 corresponding to the read time t32, there is a possible case in which the signboard KB indicated by the black circle has already been removed from the line. Therefore, the read time t32 cannot be defined as a use start time. The above case is likely to occur in the case of the parts PT which are placed on a downstream side (the side close to the removing place) of the manufacturing line LN1.

On the other hand, as indicated in the lower one of the two manufacturing lines LN1 corresponding to the read time t32, there may be the case in which the use of the parts PT of the signboards KB indicated by the inverted triangles has not started and the part PT of the signboard KB indicated by the black circle that is not put on the line remains. Therefore, even the read time t32 cannot be defined as a use end time. The above case may occur in the case of the parts PT which are placed on an upstream side (the side close to the starting place) of the manufacturing line LN1.

Next, the manufacturing line LN1 at the time t42 of the signboards KB indicated by the inverted triangles collected in the fourth collection, that is, collected in the next collection is examined. At the time t42, the parts PT that start to be newly used are only those of the signboards KB indicated by the inverted triangles or the diamond shapes. That is, the parts PT of the signboards KB indicated by the circles collected before the inverted triangles are collected are not put on the line after the read time t42. Therefore, the read time t42 of the signboard KB indicated by the inverted triangles collected after the signboard KB indicated by the black circle is collected can be defined as a use end time. Specifically, at the time t42, the last product in the manufacturing line LN1 (i.e., a product located at the start of the manufacturing line LN1) is defined as a last product.

Next, the manufacturing line LN1 at the read time t22 of the signboards KB indicated by the squares collected in the second collection, that is, in the previous collection is examined. At the read time t22, there may be the case in which the use of the parts PT of the signboards KB indicated by the squares has already been completed and the part PT of the signboard KB indicated by the black circle is being used. For example, in the case of the parts PT mounted in the last part on the downstream side of the manufacturing line LN1, the parts PT may be removed from the line after being mounted on products and undergoing inspections. Thus, as shown in Fig. 6, there may be the case in which the signboard KB indicated by the black circle has already been removed from the line. Therefore, the read time t22 also cannot be defined as a use start time.

Next, the manufacturing line LN1 at the time t12 of the signboards KB indicated by the triangles collected in the first collection, that is, collected two times before the collection of the signboards KB is examined. At the read time t12, the parts PT of the signboards KB indicated by the triangles or squares are used and the parts PT of the signboard KB indicated by the black circle are never used. This is because the part PT of the signboard KB indicated by the black circle is never used before the collected time t21 of the second collection in which the signboards KB indicated by the squares are collected.

Therefore, the read time t12 of the signboards KB indicated by the triangles, which have been collected two times before the collection of the signboard KB indicated by the black circle, can be defined as a use start time. Specifically, at the read time t12, the first product in the manufacturing line LN1 (i.e., a product located in the end of the manufacturing line LN1) is defined as a first product.

Note that at the read time t12, products mounted with the parts PT of the signboard KB indicated by the black circle cannot exist in the manufacturing line LN1. Therefore, at the read time t12, the last product in the manufacturing line LN1 is defined as a first product.

In the parts trace management system according to this embodiment, as described above, for each signboard KB, a time period from the read time of the signboard KB collected two times before the collection of that signboard KB to the read time of the signboard KB collected next time is defined as a use time period in the manufacturing line LN1. The parts PT with the signboard KB of interest attached thereto are never used before the read time of the signboards KB collected two times before the collection of the signboard KB of interest. Further, the parts PT with the signboard KB of interest attached thereto are never used later than the read time of the signboards KB collected immediately after the collection of the signboard KB of interest. As a result, the number of products to be extracted can be reduced while all the products using defective parts are thoroughly extracted.

In the past, as an example, when a defect occurs in a parts lot, products manufactured in about several days have been defined as target products on which defective parts have possibly been used. In contrast to this, by using the parts trace management system according to this embodiment, target products can be narrowed down to products manufactured in several hours when a defect occurs in a parts lot. As a result, when a defect occurs in a parts lot, the number of such target products can be reduced to about one-fifth of the number in the related art.

### (Second Embodiment)

### <Configuration of parts trace management system>

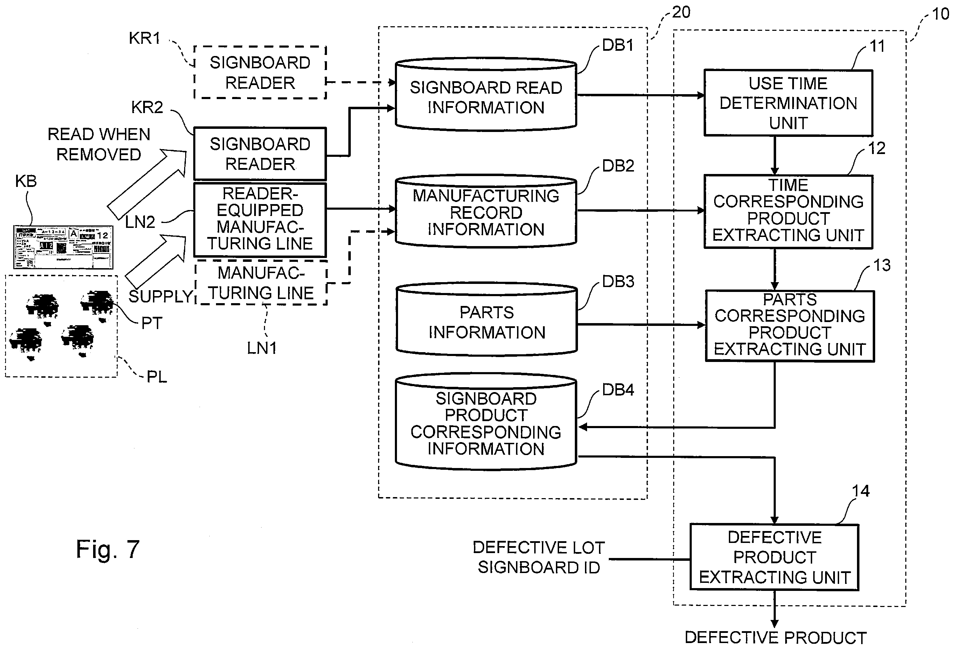

Next, the parts trace management system according to a second embodiment is described with reference to Fig. 7. Fig. 7 shows a block diagram of a parts trace management system according to the second embodiment. As shown in Fig. 7, the parts trace management system according to the second embodiment includes, in addition to the manufacturing line LN1, the signboard reader KR1, the control unit 10, and the storage unit 20 according to the first embodiment shown in Fig. 1, a reader-equipped manufacturing line LN2 and another signboard reader KR2. Note that the reader-equipped manufacturing line LN2 is provided with the signboard reader KR2 for reading signboards KB attached to parts PT. Note that the signboard box KP is omitted in Fig. 7.

As described in the first embodiment, the manufacturing line LN1 shown in Fig. 7 is not provided with a signboard reader. Therefore, in the manufacturing line LN1, the signboards KB are collected and carried to the signboard reader KR1, and then the plurality of signboards KB are collectively read by the signboard reader KR1. Contrary to this, in the reader-equipped manufacturing line LN2 shown in Fig. 7, the signboard KB can be removed and read by the signboard reader KR2 each time the first part PT is taken out from a parts lot PL with the signboard KB attached thereto and supplied to the reader-equipped manufacturing line LN2. For example, the reader-equipped manufacturing line LN2 is a manufacturing line newly installed in addition to the manufacturing line LN1.

As shown in Fig. 7, the use time determination unit 11 determines a use time in which the parts PT with each signboard KB attached thereto may be used in the manufacturing line LN1 or the reader-equipped manufacturing line LN2 based on the signboard read information DB1.

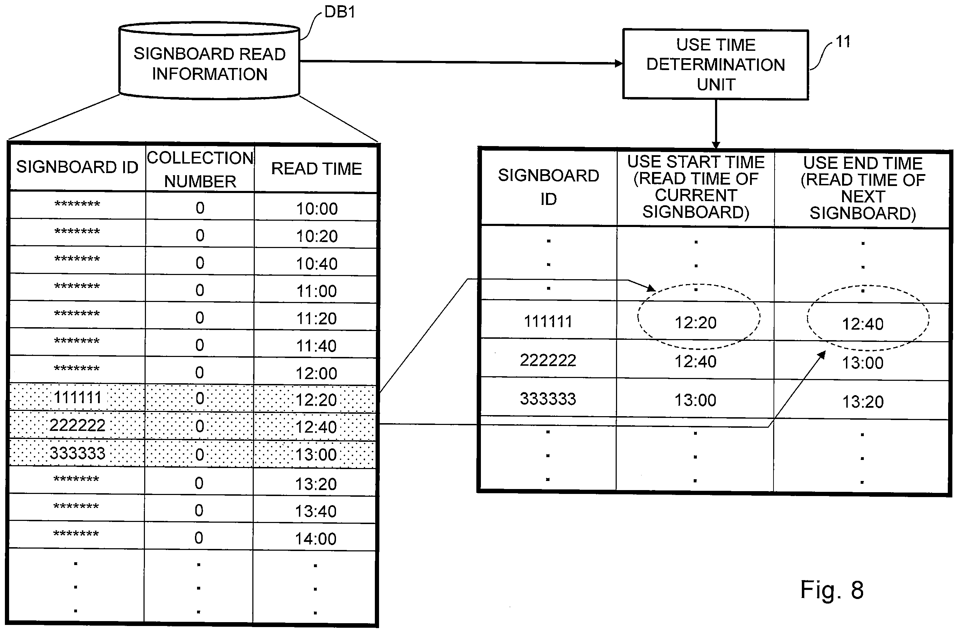

Note that Fig. 8 shows signboard read information DB1 and information output from a use time determination unit 11. Fig. 8 is a drawing corresponding to Fig. 2 according to the first embodiment. Further, both the signboard read information DB1 and the information output from the use time determination unit 11 shown in Fig. 8 are imaginary.

As shown in Fig .8, the signboard read information DB1 includes a read time of each signboard KB read by the signboard reader KR2. Each signboard KB is identified by a unique signboard ID which is identification information. As an example shown in Fig. 8, although the signboards KB are read by the signboard reader KR2 at intervals of 20 minutes, the read intervals of the signboards KB do not have to be constant.

Note that since the signboards KB read by the signboard reader KR2 are read one by one without being collected, the number of times of collection is zero. Therefore, using this number of times of collection as an index, the use time determination unit 11 can distinguish between the signboards KB read by the signboard reader KR1 and the signboards KB read by the signboard reader KR2.

Note that although the signboard read information DB1 includes a read time of each signboard KB read by the signboard reader KR1 shown in Fig. 2, it is omitted in Fig. 8. Further, the index for distinguishing the signboards KB read by the signboard reader KR2 is not limited to the number of times of collection.

The signboard read information DB1 shown in Fig. 8, as an imaginary specific example, includes a signboard KB with a signboard ID 111111, a signboard KB with a signboard ID 222222, and a signboard KB with a signboard ID 333333. As shown in Fig. 8, the signboard KB with the signboard ID 111111 was read at time 12:20. The signboard KB with the signboard ID 222222 was read at time 12:40. Further, the signboard KB with the signboard ID 333333 was read at time 13:00.

Further, as shown in Fig. 8, the use time determination unit 11, for each signboard KB read by the signboard reader KR2, determines a read time of the signboard KB as a use start time in the reader-equipped manufacturing line LN2, and a read time of the next signboards KB as a use end time. That is, the information output from the use time determination unit 11 includes a use time period (a use start time and a use end time) of each signboard in the reader-equipped manufacturing line LN2.

The information output from the use time determination unit 11 is described using the above-described imaginary specific example.

As shown in Fig. 8, for the signboard KB with the signboard ID 111111, the read time 12:20 is defined as a use start time in the reader-equipped manufacturing line LN2, and the read time 12:40 of the next signboard KB with the signboard ID 222222 is defined as a use end time in the reader-equipped manufacturing line LN2.

For the signboard KB with the signboard ID 222222, the read time 12:40 is defined as a use start time in the reader-equipped manufacturing line LN2, and the read time 13:00 of the next signboard KB with the signboard ID 333333 is defined as a use end time in the reader-equipped manufacturing line LN2.

Further, for the signboard KB with the signboard ID 333333, the read time 13:00 is defined as a use start time in the reader-equipped manufacturing line LN2, and the read time 13:20 of the next signboard KB is defined as a use end time in the reader-equipped manufacturing line LN2.

For each signboard KB, the time corresponding extracting unit 12 shown in Fig. 7 extracts products which had been on the reader-equipped manufacturing line LN2 during the above-described use time period based on the information output from the use time determination unit 11 (a use time period of each signboard KB) and the manufacturing record information DB2.

Other configurations are the same as those of the first embodiment, and thus their explanations are omitted.

As described above, the reader-equipped manufacturing line LN2 according to the second embodiment is provided with the signboard reader KR2. Further, the signboard KB is removed and read by the signboard reader KR2 each time the first part PT is taken out from a parts lot PL with the signboard KB attached thereto and supplied to the reader-equipped manufacturing line LN2. Therefore, for each signboard KB read by the signboard reader KR2, a time period from a read time of the signboard KB to a read time of a next signboard KB can be defined as a use time period in the reader-equipped manufacturing line LN2.

That is, in the reader-equipped manufacturing line LN2, the use time period can be narrowed down to a period shorter than that in the manufacturing line LN1. As a result, regarding products manufactured in the reader-equipped manufacturing line LN2, when products using defective parts are extracted based on the signboards KB, the number of products to be extracted can be reduced to less than that of products manufactured in the manufacturing line LN1.

Note that the present disclosure is not limited to the above described embodiments and various modifications can be made without departing from the spirit of the present disclosure. For example, a plurality of manufacturing lines LN1 and/or a plurality of reader-equipped manufacturing lines LN2 may be provided.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A parts trace management system comprising: a manufacturing line (LN1) to which parts (PT) with a signboard (KB) attached thereto are supplied;
a reader (KR1) configured to read a signboard (KB) that is removed when the parts (PT) start to be supplied to the manufacturing line (LN1); and
a storage unit (20) configured to store a read time of a group of signboards (KB) including the signboard (KB) collected at a predetermined time, the read time being read by the reader (KR1),
the parts trace management system being configured to narrow down a group of products using the parts (PT) with the signboard (KB) attached thereto based on the read time of the group of signboards (KB) read by the reader (KR1), wherein
the group of products using the parts (PT) with the signboard (KB) attached thereto is narrowed down by defining a time period from a read time of a group of signboards (KB) collected two times before the collection of the signboard (KB) to a read time of a group of signboards (KB) collected immediately after the collection of the signboard (KB) as a time period during which the parts (PT) with the signboard (KB) attached thereto are used in the manufacturing line (LN1).

2. The parts trace management system according to Claim 1, wherein
the narrowed-down products are extracted based on identification information of the signboard (KB) by storing the correspondence between the narrowed-down group of the products and the signboard (KB) in the storage unit (20).

3. The parts trace management system according to Claim 1 or 2, further comprising a reader-equipped manufacturing line (LN2) provided with another reader (KR2) configured to read a signboard (KB), wherein
in the reader-equipped manufacturing line (LN2), a signboard (KB) attached to parts (PT) is read by the another reader (KR2) when the parts (PT) start to be supplied to the reader-equipped manufacturing line (LN2), and
for the parts (PT) with the signboard (KB) attached thereto which has been read by the another reader (KR2), the group of the products using the parts (PT) is narrowed down by defining a time period from a read time of the signboard (KB) read by the another reader (KR2) to a read time of a next signboard (KB) as a time period during which the parts (PT) are used in the reader-equipped manufacturing line (LN2).

4. A parts trace management method comprising:
removing a signboard (KB) attached to parts (PT) when the parts (PT) start to be supplied to a manufacture line (LN1);
collecting a group of signboards (KB) including the removed signboard (KB) at a predetermined time and collectively reading the collected group of signboards (KB) by a reader (KR1), and
narrowing down a group of products using the parts (PT) with the signboard (KB) attached thereto based on a read time of the group of the signboards (KB) by the reader (KR1), wherein
the group of the products using the parts (PT) with the signboard (KB) attached thereto are narrowed down by defining a time period from a read time of a group of signboards (KB) collected two times before the collection of the signboard (KB) to a read time of a group of signboards (KB) collected immediately after the collection of the signboard (KB) as a time period during which the parts (PT) with the signboard (KB) attached thereto are used in the manufacturing line (LN1).

5. The parts trace management method according to Claim 4, wherein
the narrowed-down products are extracted based on identification information of the signboard (KB) by storing the correspondence between the narrowed-down group of the products and the signboard (KB).

6. The parts trace management method according to Claim 4 or 5, wherein
in a reader-equipped manufacturing line (LN2) provided with another reader (KR2) configured to read a signboard (KB), a signboard (KB) attached to parts (PT) is read by the another reader (KR2) when the parts (PT) start to be supplied to the reader-equipped manufacturing line (LN2), and
for the parts (PT) with the signboard (KB) attached thereto which has been read by the another reader (KR2), the group of the products using the parts (PT) is narrowed down by defining a time period from a read time of the signboard (KB) read by the another reader (KR2) to a read time of a next signboard (KB) as a time period during which the parts (PT) are used in the reader-equipped manufacturing line (LN2).
